# EUROPEAN PATENT SPECIFICATION

(11) **EP 1 536 655 B1**
(45) Date of publication and mention of the grant of the patent: **26.05.2010**
(21) Application number: 04026378.2
(22) Date of filing: 05.11.2004
(51) Int. Cl.: H04W 24/00

(54) **Power measuring method on wireless system**
Leistungsmessungsverfahren für ein drahtloses System
Procédé de mesure de la puissance d'un système sans fil

(30) Priority: 26.11.2003 KR 2003084654
(43) Date of publication of application: 01.06.2005
(73) Proprietor: LG Electronics, Inc., Seoul (KR)
(72) Inventor: Kim, Seung-Min, Songpa-Gu, Seoul (KR)
(74) Representative: Katérle, Axel

(56) References cited:
- WO-A-03/096737
- US-B1- 6 219 340
- US-B1- 6 519 227
- BIRGENHEIER R A: "Measuring waveform quality, code-domain power, time offsets and phase offsets of CDMA signals" INSTRUMENTATION AND MEASUREMENT TECHNOLOGY CONFERENCE, 1996. IMTC-96. CONFERENCE PROCEEEDINGS. QUALITY MEASUREMENTS: THE INDISPENSABLE BRIDGE BETWEEN THEORY AND REALITY., IEEE BRUSSELS, BELGIUM 4-6 JUNE 1996, NEW YORK, NY, USA,IEEE, US, vol. 1, 4 June 1996 (1996-06-04), pages 615-621, XP010163952 ISBN: 0-7803-3312-8

## Description

### BACKGROUND OF THE INVENTION

### 1. Field of the Invention

The present invention relates to a wireless system, and more particularly, to a power measuring method in a mixed wireless mobile communication system of a time division multiple access (TDMA) and a code division multiple access (CDMA).

### 2. Description of the Conventional Art

Generally, a multiple access method refers to a method that a plurality of users share time and frequency simultaneously and have an access. The multiple access method includes a frequency division multiple access (FDMA) method, a time division multiple access (TDMA) method, and a code division multiple access (CDMA) method. The FDMA method is a method for allocating one frequency per each user.

The TDMA method is obtained by adding a time division notion to a frequency division notion of the FDMA method. In the TDMA method, a voice signal is converted into a digital frame or a packet thus to be transmitted, and each channel is divided into a short time period.

The CDMA method applies a spectrum spread technique, in which a plurality of users simultaneously share time and frequency. Each user is divided as a specific code, and a transmitter and a receiver have to be synchronized in order to modulate and demodulate code spread data.

Generally, functions of the TDMA/CDMA methods in a mobile communication system are certified by measuring a quality of an output power of a base station or a mobile station. A time domain power is measured in the TDMA method and a code domain power is measured in the CDMA method, and an equipment for measuring the conventional time domain is different from an equipment for measuring the conventional code domain power. Therefore, the equipment for measuring the time domain power can be used only in a system of the TDMA method, and the equipment for measuring the code domain power can be used only in a system of the CDMA method.

In order to measure the quality of the output power, in the CDMA method, a certain allocated frequency band is divided into different codes, respectively thus to distinguish channels. At this time, a transmission frequency and a receiving frequency are different from each other, so that a duplexer is used at a high frequency end. Also, in the TDMA method, the same frequency band is allocated in transmitting and receiving data, and a transmission channel and a reception channel are distinguished by a time division switching, thereby using a time division switch at the high frequency end.

Certifying a function of a mobile communication system by measuring a quality of an output power of a base station or a mobile station on the time domain or on the code domain is important. Said process is widely utilized over the entire mobile communication industry such as a quality test at the time of producing a mobile station, a measurement of a communication quality between a base station and a mobile station, and an operation of a radio resource.

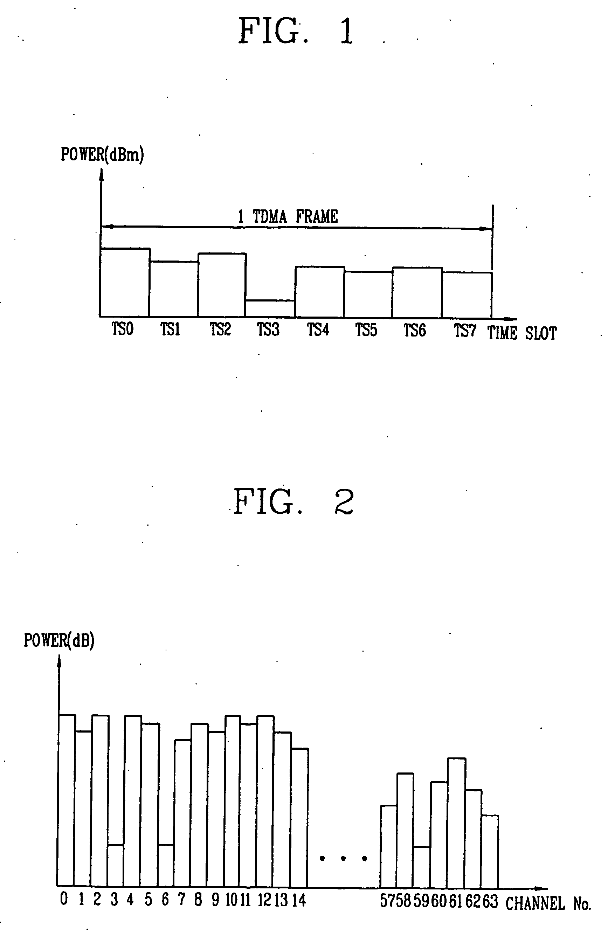

Figure 1 is one embodiment of the conventional TDMA system, which shows a time domain power measurement in a global system for mobile communication (GSM) method.

Referring to Figure 1, a frequency band allocated to an up-link and a down-link in the GSM method is divided into each channel, and the divided channel is again divided into time by using a TDMA method. Herein, the divided channel is divided into a time slot (or a burst period), the most basic unit in the TDMA. The up-link denotes a transmission path from a mobile station to a base station, whereas the down-link denotes a transmission path from a base station to a mobile station. One TDMA frame is divided into 8 time slots (TS0∼TS7), and according to this, a power is measured per each time slot. At this time, the power is represented as a dBm unit. The time slot 0 is allocated to the down-link and to which a data signal or operational information for controlling a mobile station is transmitted from a base station. The rest time slots TS1∼TS7 are allocated to the up-link and the down-link, and detect and display levels which are being operated at each channel.

Figure 2 is a drawing showing a code domain power measurement in IS-95 method as one embodiment of a mobile communication system based on the conventional CDMA method.

As shown, channels in the IS-95 method are divided into 64 (0-63), and each divided channel has an output power measured and displayed. Herein, the code domain power is represented as a dB unit. In case of measuring and displaying the code domain power in the mobile communication system based on the CDMA method, not only a signal power of each channel but also a noise power can be simultaneously measured. In Figure 2, the channels 3, 6 and 59 of which powers are greatly decreased compared to the other channels display a noise power which has not received data to be transmitted. Herein, measurement results are together displayed on one same screen, so that a signal to noise ratio (SNR or S/N) can be noticed easily.

In order to distinguish channels in the CDMA method, a Walsh code is generally used. Since a plurality of users use the same frequency in the CDMA method, a power management is necessary. According to this, a power of a base station is measured by being distinguished per the Walsh code, and a code domain power is measured by comparing a non-operational code power with a total power, thereby properly distributing a power, thus reducing an interference between channels, and maximizing a capacity of a section.

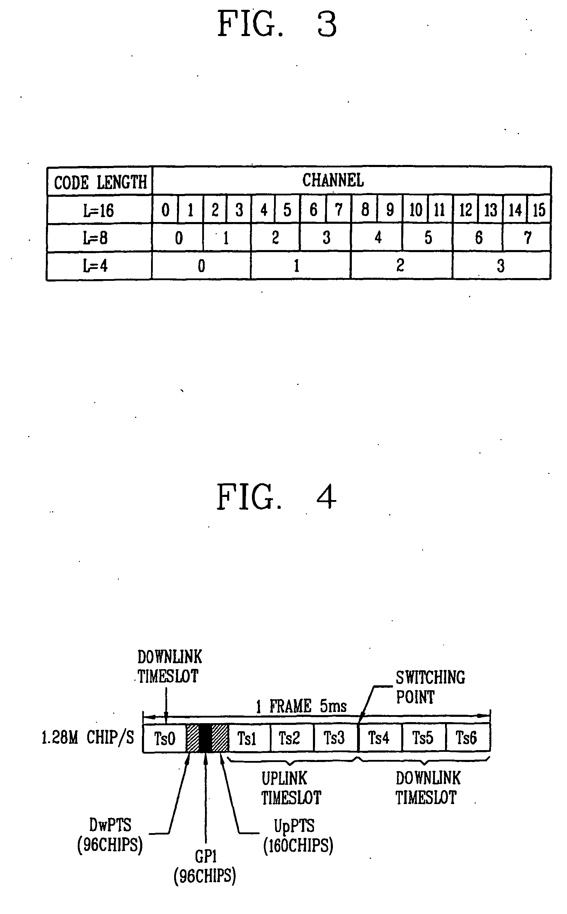

Figure 3 is a drawing showing a state of a channel allocated by a Walsh code length in a general CDMA method. Referring to Figure 3, when the Walsh .code length is given as 4 (L=4), 4 channels of 0-3 are allocated, and when the Walsh code length is given as 8 (L=8), 8 channels of 0-7 are allocated. Also, when the Walsh code length is given as 16 (L=16), 16 channels of 0∼15 are allocated. From the above, it can be seen that the allocation of the channel is proportional to the L, the Walsh code length.

As aforementioned, in order to measure a transmitting power in the CDMA system, the code domain power estimation for measuring an output power per a channel was performed. However, since transmitting frequencies of the base station and the mobile station are different from each other and the TDMA method was not introduced for each CDMA channel, a method for measuring the code domain power in the TDMA method has not been proposed. Likewise, a method for measuring the time domain power in the CDMA method has not been proposed. Therefore, there is a problem that a method for measuring a code region in the next generation mobile communication system where the TDMA method and the CDMA method are mixed, such as a wideband CDMA time division duplex (WCDMA TDD) method system or a time division synchronous CDMA (TD-SCDMA).

Document WO 03/096737 A1 discloses a base station and a mobile station which are operating in a compressed mode for performing a hard handover. A transmission power measuring section in a transmission signal train measures the transmission power of each spreading code using code domain power measurement.

Document US 6,219,340 B1 relates to an apparatus for displaying power levels for multiple code layers. On a code domain power display, a power level for each active code channel is displayed using a bar. Code power for different symbol rates is displayed simultaneously on a same screen.

### SUMMARY OF THE INVENTION

Therefore, an object of the present invention is to provide a power measuring method of a wireless system capable of simultaneously measuring and displaying a code domain power and a time domain power in a mixed wireless communication system of a TDMA method and a CDMA method such as a WCDMA TDD method and a TD-SCDMA method which will be used hereafter.

To achieve these and other advantages and in accordance with the purpose of the present invention, as embodied and broadly described herein, there is provided a power measuring method in a wireless communication system according to the features of claim 1. Further preferred embodiments are according to the dependent claims.

Preferably, not only the time domain power and the code domain power but also a channel name, an SF, a code number, a time slot number, and etc. are displayed on the display unit by a marker. The channel name can be displayed by an overwriting on a code channel power level, or can be selectively omitted.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a drawing showing a time domain power measurement in a mobile communication system based on the conventional TDMA method;
Figure 2 is a drawing showing a code domain power measurement in a mobile communication system based on the conventional CDMA method;
Figure 3 is a drawing showing a state of a channel allocated by a Walsh code length in a general CDMA method;
Figure 4 is a drawing showing up/down link time slots of a TD-SCDMA which has been announced by the conventional china wireless telecommunication standard group (CWTS);
Figure 5 is a flow chart showing a process for measuring a power in a mixed wireless mobile communication system of a TDMA method and a CDMA method according to the present invention; and
Figure 6 is a drawing showing a result displayed on a display unit as one embodiment of a power measuring method in a mixed wireless mobile communication system of a TDMA method and a CDMA method according to the present invention.

### DETAILED DESCRIPTION OF THE PREFERRED EMBODIMENTS

Reference will now be made in detail to the preferred embodiments of the present invention, examples of which are illustrated in the accompanying drawings.

The present invention is implemented in a WCDMA TDD method or a TD-SCDMA method which will be used in the future. Also, the present invention can be implemented in a mixed wireless mobile communication system of a TDMA method and a CDMA method.

The WCDMA TDD method and the TD-SCDMA method need one frequency band since an uplink and a downlink are divided by a time division. So far, a paired spectrum that an up link and a down link are divided by a frequency division has been preferred. However, it is difficult to assign the paired spectrum universally. Therefore, in the future, an unpaired spectrum will be used additionally and the TDD method requiring one frequency band is applied thereto.

Hereinafter, preferred embodiments of the present invention will be explained with reference to the attached drawings.

Figure 4 is a drawing showing up/down link time slots of a TD-SCDMA which has been announced by the conventional china wireless telecommunication standard group (CWTS). The CWTS proposed a standard of the TD-SCDMA, and herein, explanations will be performed on the basis of a spec 3GPP TS 25.221 and a CWTS TSM 5.02.

As shown in Figure 4, in case of the TD-SCDMA, one frame is divided into 7 time slots respectively having 675µs time, and three special slots, a downlink pilot time slot (DwPTS), a guard period (GP), and an uplink pilot time slot (UpPTS) exist between TS0 and TS1. The DwPTS, GP, and UpPTS divide the TS0 and TS1 which are always fixed. Also, the DwPTS, GP, and UpPTS is not spread-demodulated into an orthogonal code thereby not to be measured on a code domain. On the basis of a switching point, the front side is allocated to the uplink and the back side is allocated to the downlink.

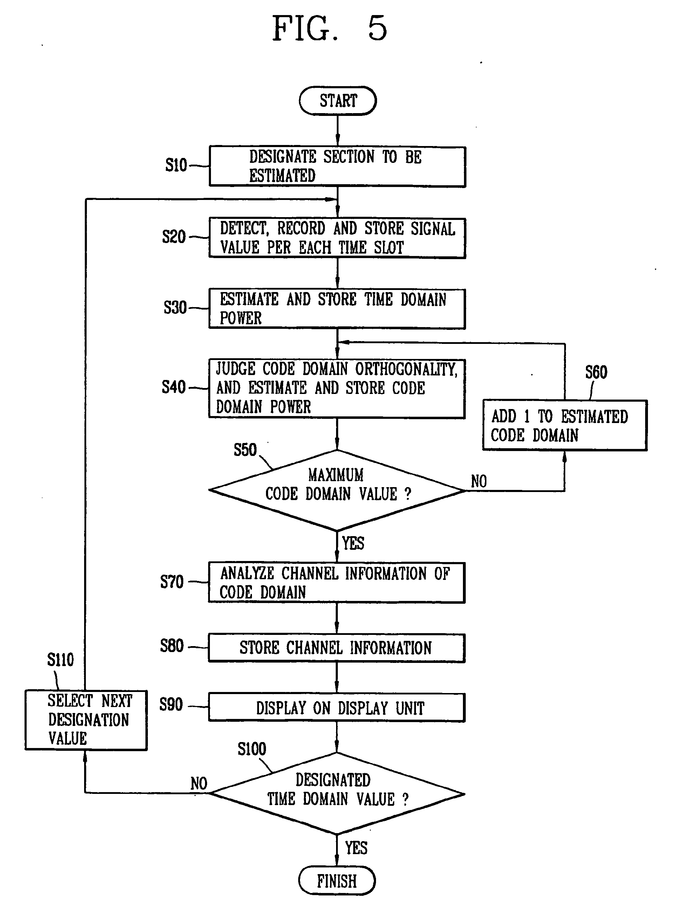

Figure 5 is a flow chart showing a process for measuring a power in a mixed wireless mobile communication system of a TDMA method and a CDMA method according to the present invention.

Referring to Figure 5, a section where an output power of the system is to be measured is designated (S10). The estimation section designation is performed by designating one of a base station and a mobile station or by designating both of them. To the estimation, a time domain estimation section divided into time slots is designated. Once the estimation section is designated, a time domain power is measured. A signal value per a time slot inside the designated estimation section is detected, and temporarily recorded-stored at an inner memory of an estimation device (S20). Then, from the recorded-stored signal value for a corresponding time slot of the estimation section, an output power by a time domain, that is, a time domain power is measured and stored in the memory (S30).

Next, a wireless output for each code domain corresponding to the time domain is measured. To this end, each time slot is divided into code channels. At this time, a spreading factor (SF) for one time slot is set in accordance with a standard. For example, in case of the TD-SCDMA, a maximum SF is set as 16 thereby to allocate 16 code channels for one time slot. Then, an orthogonality of a corresponding code domain is judged thus to detect a channel number, to measure a corresponding output power, and to store (S40). The SF denotes the number of chips per one data symbol in a channelizing for converting all data symbols into the number of chips. Next, it is judged whether said judged orthogonality is a maximum value of a communication channel by a maximum code domain or a Walsh code (S50). At this time, code channels per each time slot are distinguished by certifying an orthogonality with a reversed order of an orthogonal variable spreading factor (OVSF) code. Herein, even if an SF shorter than a maximum SF is allocated, each channel is distinguished and a power of the distinguished channel can be measured.

In the step of judging the orthogonality of the code domain, if the orthogonality is not the value of the maximum communication channel, it is judged as that a code domain of which output power has not been measured yet exists. According to this, 1 is added to a current code domain channel number (S60), and the step of judging the orthogonality (S50) is again performed. If the orthogonality is the value of the maximum communication channel, it is judged as that output powers of all the code domains have been measured. According to this, channel information of each measured code domain is analyzed (S70). Herein, the channel information can be certified by a channel name, an SF, a code number, a corresponding time slot number, and etc. which will be displayed on a display unit, and an SF and a code number of each code channel can be certified by a received layer 3 message, thereby enabling to analyze and write a code channel estimation time and a name. When the analysis of the channel information is completed, the analyzed channel information is stored in the memory (S80). Next, the estimation results are displayed on a display unit. The time domain power, the code domain power, the channel information, and the like which have been measured and stored in the above steps are displayed on a display unit such as a liquid crystal display (LCD), a plasma display panel (PDP), a color-ray tube (CRT), a color display tube (CDT), a color picture tube (CPT), a multi display tube (MDT), a vacuum fluorescent display (VFD), and the like (S90). Herein, a channel name and etc. constituting the channel information can be displayed by a user's selection, for example, by the user's pressing a button or by the user's reservation setting. The channel information is displayed in a channel information box on the display unit as a letter. Also, the time domain power is displayed as a dBm unit, and the code domain power is displayed as a dB unit.

Next, it is judged whether a designated time domain which has not been measured exists or not. Herein, it is judged whether the measured time domain has a maximum designation value (S100). As a result of the judgment, if the measured time domain does not have the maximum designation value, a time domain designation section to be measured next is selected (S110) and then system returns to the step of detecting a signal value per a time slot inside the designated estimation section and recording-storing in a corresponding buffer (S20) thus to repeatedly perform the subsequent steps. If the estimated time domain has a maximum designation value, it is judged as that time domain powers and code domain powers of all the sections have been estimated and displayed and thereby a completion is performed.

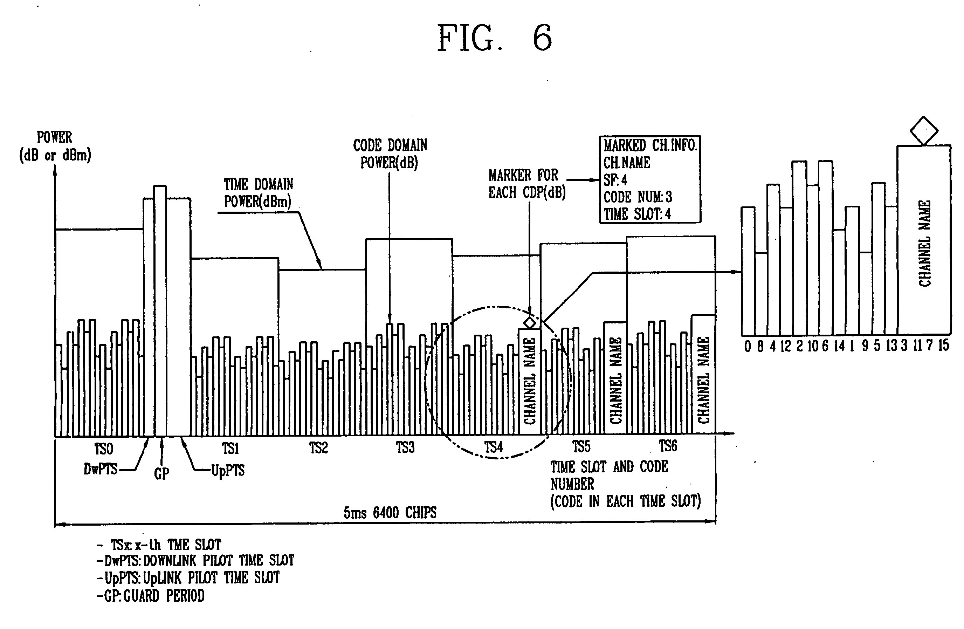

Figure 6 is a drawing showing a result displayed on a display unit as one embodiment of a power measuring method in a mixed wireless mobile communication system of a TDMA method and a CDMA method according to the present invention.

Referring to Figure 6, as one example, an estimation section of 5ms period is designated as one frame by the TD-SCDMA method, and one frame is divided into 7 time slots (TSO∼TS6). In the TD-SCDMA method, the time slot 0 is allocated as a downlink for transmitting data from a base station to a mobile station and the time slot 1 is allocated as an uplink for transmitting data from a mobile station to a base station. The rest time slots TS2∼TS6 are designated and allocated by a service operator, thereby being elastically operated by a service intention and a system operating characteristic of each service operator. For example, in case that TS2 and TS3 as well as TS1 are allocated as an uplink for transmitting data from a mobile station to a base station and TS4, TS5, and TS6 as well as TS0 are allocated as a downlink for transmitting data from a base station to a mobile station, at least one of the TS1, TS2, and TS3 is designated as a time division section when an estimation section is a mobile station section, and at least one of the TS0, TS4, TS5, and TS6 is designated as a time division section when an estimation section is a base station.

As aforementioned, the time domain power for each time slot is estimated and stored. Each time slot is distinguished as a code channel, and 16 code channels are allocated to one time slot by setting a maximum SF 16 per one time slot. Also, an orthogonality of a corresponding code domain is judged by a reversed order of an OVSF code thus to detect a channel number, to estimate a corresponding output power, that is, a code domain power, and then to store. Next, channel information such as a channel name, an SF, a code number, and etc. is analyzed, and then the estimation result and the channel information are displayed on the display unit. The estimated and stored time domain power, the code domain power, the channel information, the time slot number, and etc. are displayed as letters in the channel information box on the display unit as shown in Figure 6. Herein, a channel name and etc. constituting the channel information can be displayed by a user's selection, for example, by the user's pressing a button or by the user's reservation setting, or can not be displayed. At this time, if the display unit is sufficiently large, the channel name can be displayed by being overwritten on a code channel power level, and if the display unit is small, the information can be displayed separately only for a channel having a channel information box. The time domain power is displayed as a dBm unit, and the code domain power is displayed as a dB unit.

As aforementioned, in the domain power measuring method of a wireless system according to the present invention, a method for measuring a code domain power on a time domain which was impossible in the conventional art is disclosed, thereby simultaneously measuring the time domain power and the code domain power in the mixed system of the TDMA method and the CDMA method such as the TD-SCDMA and the WCDMA TDD method which will be used in the future and enabling to see the information easily.

Also, a code domain power measuring method on a time domain which was just proposed to estimate an orthogonality and a channel power of each channel by measuring a peak code domain error per one time slot and was not concretely mentioned in the conventional art is disclosed in the present invention, thereby being used as a barometer for a technique development of this field.

The present invention, relates to a method for selecting at least one time slot and displaying a code domain power and a time domain power corresponding to the time slot on the display unit. A method for displaying only an average value of an uplink and a downlink can be also implemented.

## Claims

1. A power measuring method in a wireless communication system mixing a time division multiple access, TDMA, method and a code division multiple access, CDMA, method, wherein each TDMA frame is divided in a plurality of time slots, and each time slot has allocated thereto a plurality of CDMA code channels distinguished by different spreading codes, the power measuring method comprising the steps of:
measuring (S30) time domain power of each time slot of a designated section of a TDMA frame where signal output power is to be measured;
measuring (S40), for one or more code channels of each time slot of the designated section, code domain power of each code channel per time slot; and
displaying (S90) the measured time domain power and the measured code domain power simultaneously on a display unit.

2. The method of claim 1, wherein the section includes a base station section, namely a downlink section for transmitting a signal and data from a base station to a mobile station.

3. The method of claim 1, wherein the section includes a mobile station section, namely an uplink section for transmitting a signal and data from a mobile station to a base station.

4. The method of claim 1, wherein the section includes both a base station section and a mobile station section at the same time.

5. The method of any one preceding claim, wherein the step of measuring (S30) time domain power comprises the steps of:
detecting (S20) a signal value in each time slot of the designated section and
temporarily storing (S20) the detected signal value in a memory; and
measuring the time domain power using the temporarily stored signal value.

6. The method of any one preceding claim, wherein the step of measuring (S40) code domain power comprises the steps of:
dividing the designated section into code channels, detecting a channel number by judging (S40) an orthogonality of a corresponding code domain, and storing (S40) a corresponding code domain power.

7. The method of claim 6, wherein the orthogonality of the code domain is repeatedly judged until the detected code domain channel number becomes a maximum code domain channel number (S50).

8. The method of claim 7, wherein the maximum code domain channel number corresponds to a maximum spreading factor of an OVSF code.

9. The method of any one preceding claim, wherein the step of displaying (S90) measured time domain power and measured code domain power on a display unit comprises the steps of:
analyzing (S70) channel information of each estimated code domain; and
displaying (S90) each channel information on the display unit with measured time domain power and measured code domain power.

10. The method of claim 9, wherein the channel information includes a channel name of each code, a spreading factor, and a time slot number.

11. The method of claim 9 or 10, wherein the channel information is displayed in letter or figure form in a channel information box on the display unit.

12. The method of claim 10 or 11, wherein the channel name can be displayed in an overwriting manner on a code channel power level.

13. The method of any one of claims 10 to 12, wherein the channel name can be selectively omitted.

14. The method of any one of preceding claim, wherein the time domain power is displayed as a dBm unit.

15. The method of any one preceding claim, wherein the code domain power is displayed as a dB unit.

16. The method of any one of claims 9 to 15, wherein the step of displaying (S90) the channel information on the display unit further comprises the step of displaying channel information of a selected time slot together with measured time domain power and measured code domain power for the selected time slot.

17. The method of any one of claims 9 to 15, wherein the step of displaying (S90) the channel information on the display unit further comprises the step of displaying only average values of each uplink and downlink.

18. The method of claim 17, wherein the average value is an average value of a power, which has been measured for a preset time.

## Patentansprüche

1. Leistungsmessungsverfahren in einem drahtlosen Kommunikationssystem, das ein Zeitmultiplexverfahren (Time Division Multiple Access), TDMA, und ein Codemultiplexverfahren (Code Division Multiple Access), CDMA, miteinander vermischt, wobei jeder TDMA-Rahmen in eine Vielzahl von Zeitschlitzen unterteilt ist, und jedem Zeitschlitz eine Vielzahl von CDMA-Codekanälen zugewiesen ist, die durch verschiedene Spreizcodes unterschieden werden, wobei das Leistungsmessungsverfahren die Schritte umfasst:
Messen (S30) einer Zeitbereichs-Leistung von jedem Zeitschlitz eines festgelegten Abschnitts eines TDMA-Rahmens, in dem eine Signalausgangsleistung zu messen ist;
Messen (S40), für einen oder mehrere Codekanäle von jedem Zeitschlitz des festgelegten Abschnitts, einer Codebereichs-Leistung von jedem Codekanal pro Zeitschlitz; und
Anzeigen (S90) der gemessenen Zeitbereichs-Leistung und der gemessenen Codebereichs-Leistung gleichzeitig auf einer Anzeigeeinheit.

2. Verfahren nach Anspruch 1, wobei der Abschnitt einen Basisstations-Abschnitt enthält, nämlich einen Abwärtsstrecken-Abschnitt zum Senden eines Signals und von Daten von einer Basisstation an eine Mobilstation.

3. Verfahren nach Anspruch 1, wobei der Abschnitt einen Mobilstations-Abschnitt enthält, nämlich einen Aufwärtsstrecken-Abschnitt zum Senden eines Signals und von Daten von einer Mobilstation an eine Basisstation.

4. Verfahren nach Anspruch 1, wobei der Abschnitt sowohl einen Basisstations-Abschnitt als auch einen Mobilstations-Abschnitt gleichzeitig aufweist.

5. Verfahren nach einem der vorhergehenden Ansprüche, wobei der Schritt des Messens (S30) von Zeitbereichs-Leistung die Schritte umfasst:
Erfassen (S20) eines Signalwerts in jedem Zeitschlitz des festgelegten Abschnitts und vorübergehendes Speichern (S20) des erfassten Signalwerts in einem Speicher; und
Messen der Zeitbereichs-Leistung unter Verwendung des vorübergehend gespeicherten Signalwerts.

6. Verfahren nach einem der vorhergehenden Ansprüche, wobei der Schritt des Messens (S40) von Codebereichs-Leistung die Schritte umfasst:
Aufteilen des festgelegten Abschnitts in Codekanäle, Erfassen einer Kanalnummer durch Beurteilen (S40) einer Orthogonalität eines entsprechenden Codebereichs, und Speichern (S40) einer entsprechenden Codebereichs-Leistung.

7. Verfahren nach Anspruch 6, wobei die Orthogonalität des Codebereichs wiederholt beurteilt wird bis die erkannte Codebereichs-Kanalnummer eine maximale Codebereichs-Kanalnummer (S50) wird.

8. Verfahren nach Anspruch 7, wobei die maximale Codebereichs-Kanalnummer einem maximalen Spreizfaktor eines OVSF-Codes entspricht.

9. Verfahren nach einem der vorhergehenden Ansprüche, wobei der Schritt des Anzeigens (S90) von gemessener Zeitbereichs-Leistung und gemessener Codebereichs-Leistung auf einer Anzeigeeinheit die Schritte umfasst:
Analysieren (S70) von Kanalinformationen von jedem geschätzten Codebereich; und
Anzeigen (S90) jeder Kanalinformation auf der Anzeigeeinheit mit gemessener Zeitbereichs-Leistung und gemessener Codebereichs-Leistung.

10. Verfahren nach Anspruch 9, wobei die Kanalinformationen einen Kanalnamen jedes Codes, einen Spreizfaktor und eine Zeitschlitznummer enthalten.

11. Verfahren nach Anspruch 9 oder 10, wobei die Kanalinformationen in Buchstaben- oder Figur-Form in einer Kanalinformationsbox auf der Anzeigeeinheit angezeigt werden.

12. Verfahren nach Anspruch 10 oder 11, wobei der Kanalname in einer überschreibenden Weise auf einem Codekanal-Leistungspegel angezeigt werden kann.

13. Verfahren nach einem der Ansprüche 10 bis 11, wobei der Kanalname wahlweise weggelassen werden kann.

14. Verfahren nach einem der vorgehenden Ansprüche, wobei die Zeitbereichs-Leistung als eine dBm-Einheit angezeigt wird.

15. Verfahren nach einem der vorhergehenden Ansprüche, wobei die Codebereichs-Leistung als eine dB-Einheit angezeigt wird.

16. Verfahren nach einem der Ansprüche 9 bis 15, wobei der Schritt des Anzeigens (S90) der Kanalinformationen auf der Anzeigeeinheit weiter den Schritt des Anzeigens von Kanalinformationen von einem gewählten Zeitschlitz zusammen mit gemessener Zeitbereichs-Leistung und gemessener Codebereichs-Leistung für den ausgewählten Zeitschlitz umfasst.

17. Verfahren nach einem der Ansprüche 9 bis 15, wobei der Schritt des Anzeigens (S90) der Kanalinformationen auf der Anzeigeeinheit weiter den Schritt des Anzeigens nur von Durchschnittswerten von jeder Aufwärtsstrecke und Abwärtsstrecke umfasst.

18. Verfahren nach Anspruch 17, wobei der Durchschnittswert ein Durchschnittswert einer Leistung ist, die für eine vorgegebene Zeit gemessen worden ist.

## Revendications

1. Procédé de mesure de puissance dans un système de communication sans fil mélangeant un procédé d'accès multiple par répartition dans le temps TDMA et un procédé d'accès multiple par répartition en code CDMA, dans lequel chaque trame TDMA est divisée en une pluralité d'intervalles de temps, et chaque intervalle de temps a, attribués à celui-ci, une pluralité de canaux de code CDMA distingués par des codes d'étalement différents, le procédé de mesure de puissance comprenant les étapes de :
mesure (S30) d'une puissance en domaine temporel de chaque intervalle de temps d'une section désignée d'une trame TDMA où la puissance de sortie de signal doit être mesurée ;
mesure (S40), pour un ou plusieurs canaux de code de chaque intervalle de temps de la section désignée, d'une puissance en domaine de code de chaque canal de code par intervalle de temps ; et
affichage (S90) de la puissance en domaine temporel mesurée et de la puissance en domaine de code mesurée simultanément sur une unité d'affichage.

2. Procédé selon la revendication 1, dans lequel la section inclut une section de station de base, à savoir une section de liaison descendante, pour transmettre un signal et des données d'une station de base jusqu'à une station mobile.

3. Procédé selon la revendication 1, dans lequel la section inclut une section de station mobile, à savoir une section de liaison montante, pour transmettre un signal et des données d'une station mobile jusqu'à une station de base.

4. Procédé selon la revendication 1, dans lequel la section inclut à la fois une section de station de base et une section de station mobile en même temps.

5. Procédé selon une quelconque revendication précédente, dans lequel l'étape de mesure (S30) de la puissance en domaine temporel comprend les étapes de : détection (S20) d'une valeur de signal dans chaque intervalle de temps de la section désignée et mémorisation temporaire (S20) de la valeur de signal détectée dans une mémoire ; et
mesure de la puissance en domaine temporel en utilisant la valeur de signal temporairement mémorisée.

6. Procédé selon une quelconque revendication précédente, dans lequel l'étape de mesure (S40) de la puissance en domaine de code comprend les étapes de : division de la section désignée en canaux de code, détection d'un numéro de canal en jugeant (S40) une orthogonalité d'un domaine de code correspondant, et mémorisation (S40) d'une puissance en domaine de code correspondante.

7. Procédé selon la revendication 6, dans lequel l'orthogonalité du domaine de code est jugée de façon répétitive jusqu'à ce que le numéro de canal de domaine de code détecté devienne un numéro de canal de domaine de code maximum (S50).

8. Procédé selon la revendication 7, dans lequel le numéro de canal de domaine de code maximum correspond à un facteur d'étalement maximum d'un code d'OVSF.

9. Procédé selon une quelconque revendication précédente, dans lequel l'étape d'affichage (S90) de la puissance en domaine temporel mesurée et de la puissance en domaine de code mesurée sur une unité d'affichage comprend les étapes de : analyse (S70) d'informations de canal de chaque domaine de code estimé ; et affichage (S90) de chaque information de canal sur l'unité d'affichage avec la puissance en domaine temporel mesurée et la puissance en domaine de code mesurée.

10. Procédé selon la revendication 9, dans lequel l'information de canal inclut un nom de canal de chaque code, un facteur d'étalement et un numéro d'intervalle de temps.

11. Procédé selon la revendication 9 ou 10, dans lequel l'information de canal est affichée sous une forme alphabétique ou numérique dans un cadre d'information de canal sur l'unité d'affichage.

12. Procédé selon la revendication 10 ou 11, dans lequel le nom de canal peut être affiché en surimpression sur un niveau de puissance de canal de code.

13. Procédé selon l'une quelconque des revendications 10 à 12, dans lequel le nom de canal peut être sélectivement omis.

14. Procédé selon une quelconque revendication précédente, dans lequel la puissance en domaine temporel est affichée comme une unité dBm.

15. Procédé selon une quelconque revendication précédente, dans lequel la puissance en domaine de code est affichée comme une unité dB.

16. Procédé selon l'une quelconque des revendications 9 à 15, dans lequel l'étape d'affichage (S90) de l'information de canal sur l'unité d'affichage comprend en outre l'étape d'affichage d'information de canal d'un intervalle de temps sélectionné en même temps que la puissance en domaine temporel mesurée et la puissance en domaine de code mesurée pour l'intervalle de temps sélectionné.

17. Procédé selon l'une quelconque des revendications 9 à 15, dans lequel l'étape d'affichage (S90) de l'information de canal sur l'unité d'affichage comprend en outre l'étape d'affichage uniquement de valeurs moyennes de chaque liaison montante et liaison descendante.

18. Procédé selon la revendication 17, dans lequel la valeur moyenne est une valeur moyenne d'une puissance, qui a été mesurée sur une durée prédéterminée.
